# EUROPEAN PATENT APPLICATION

(11) **EP 0 630 167 A2**
(43) Date of publication of application: **21.12.1994**
(21) Application number: 94304059.2
(22) Date of filing: 07.06.1994
(51) Int. Cl.: H04Q 7/04

(54) **Personal communicator with programmable number assignment module using a wide-area paging system**

(30) Priority: 17.06.1993 US 78133
(71) Applicant: AT&T Corp., New York, NY 10013-2412 (US)
(72) Inventor: Chakrin, Lewis Mark, Mendham, New Jersey 07945 (US); Gerszberg, Irwin, Kendall Park, New Jersey 08824 (US); Schroeder, Robert Edward, Montville, New Jersey 07045 (US); Stone, Dale Eugene, Cedar Knolls, New Jersey 07927 (US)
(74) Representative: Buckley, Christopher Simon Thirsk

(57) **Abstract**

A personal communicator is disclosed which comprises an antenna, means for receiving a number assignment module via said antenna, and means for storing the number assignment module so as to customize and/or singularize the personal communicator. Such a personal communicator can thereby be programmed remotely by a cellular service provider without having an authorized agent manually program the personal communicator.

## Description

### Field of the Invention

The present invention relates to cellular telephony in general, and more particularly, to cellular telephones that incorporate a paging capability that enables the telephones to be remotely programmed via a wide-area paging system.

### Background of the Invention

Purchases of personal communicators (e.g., cellular telephones) are usually inconvenienced by the effort required to program the personal communicator before it can be used. In general, a personal communicator can only be programmed by an authorized agent of a cellular service provider and usually only at the agent's location. Thus, the potential subscriber is often inconvenienced by the delay between the purchase and use of the phone, and by the additional costs associated with having the agent program the phone.

### Summary of the Invention

Embodiments of the present invention are capable of programming a personal communicator (e.g., a cellular telephone) while avoiding many of the costs and restrictions associated with prior techniques. Embodiments of the present invention are particularly useful for those who acquire a personal communicator and are not near an authorized agent of a cellular service provider. Furthermore, embodiments are useful for those who wish to change their service without having to incur the inconvenience and cost associated with surrendering possession of the personal communicator.

These results are obtained in an illustrative embodiment that comprises an antenna, means for receiving a number assignment module via said antenna, and means for storing said number assignment module.

### Brief Description of the Drawing

FIG. 1 shows a schematic diagram of an illustrative embodiment of the present invention.

FIG. 2 shows a block diagram of an illustrative personal communicator of the present invention.

FIG. 3 shows a flow chart detailing the preferred method of operating the illustrative embodiment of the present invention.

FIG. 4 shows a continuation of a flow chart detailing the preferred method of operating the illustrative embodiment of the present invention.

### Detailed Description

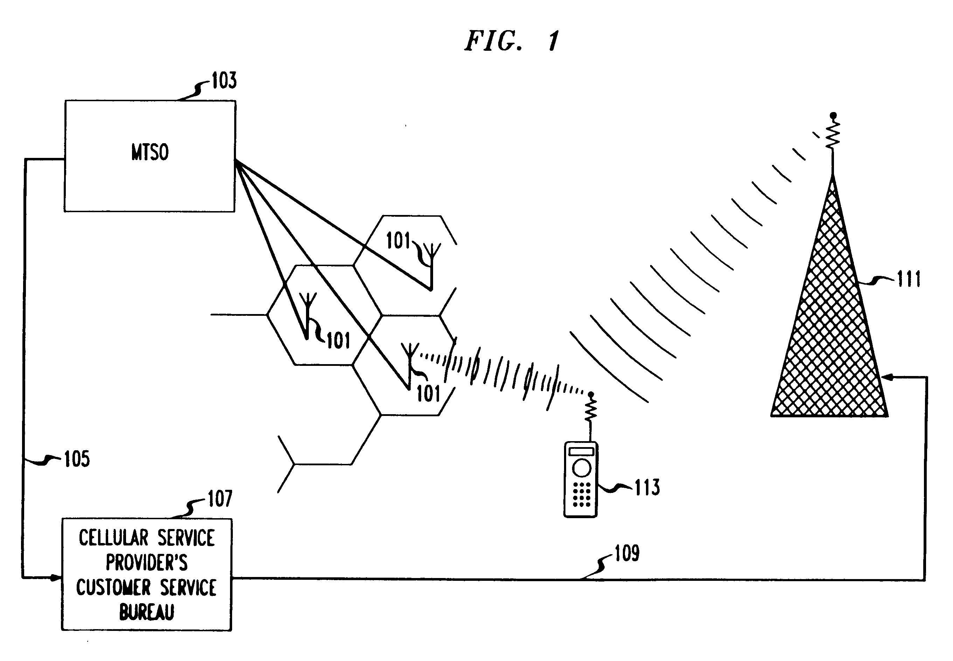

FIG. 1 shows a schematic diagram of an illustrative embodiment of the present invention. The illustrative embodiment advantageously comprises cellsites 101, mobile telephone switching office 103 (hereinafter "MTSO 103"), connection 105, cellular service provider's customer service bureau 107 (hereinafter "service bureau 107"), connection 109, antenna 111, and personal communicator 113. For the purposes of the specification, the term "personal communicator" includes, but is not limited to, cordless phones, cellular phones, wireless video phones, cellular modems, and mobile computing devices.

Cellsites 101 advantageously comprise the radio and control equipment necessary to establish and maintain the talking path to personal communicator 113. Cellsites 101 are preferably capable of relaying signals to and from MTSO 103 and personal communicator 113.

MTSO 103 is advantageously a central office for cellsites 101 and houses the control and switching elements of the cellular system. MTSO 103 is capable of relaying information between other cellsites (not shown), other personal communicators (not shown), and other MTSOs (not shown).

Connection 105 advantageously comprises a communication link (either wireline or wireless) between MTSO 103 and service bureau 107. Connection 109 advantageously comprises a communication link (either wireline or wireless) between MTSO 103 and antenna 111.

Service bureau 107 advantageously comprises a facility populated by the cellular service provider. Service bureau 107 advantageously receives and stores credit information from the potential subscriber pertaining to the potential subscriber's account. Service bureau 107 advantageously also creates and transmits a "number assignment module" to personal communicator 113 via antenna 111. For the purpose of this specification, the phrase "number assignment module" may include, but is not limited to, signals representing the personal communicator's telephone number, one or more system identification numbers, the access overload class, the group identification, the initial paging channel, the security lock code, the local use flag, the A/B system selection, and the min mark flag.

Antenna 111 advantageously comprises a electro-magnetic antenna and a wide area paging system, which is capable of transmitting the signals representing the number assignment module to personal communicator 113. For the purpose of this specification, the term "electro-magnet" includes, but is not limited to, the electro-magnetic spectrum including radio frequency and optical bands.

Personal communicator 113 advantageously comprises means for wireless transmission and reception, with cellsites 101 and antenna 111, of radio signals via one or more electro-magnetic antennas. Personal communicator 113 includes means for storing a number assignment module, as received from service bureau 107 for the purpose of authentication.

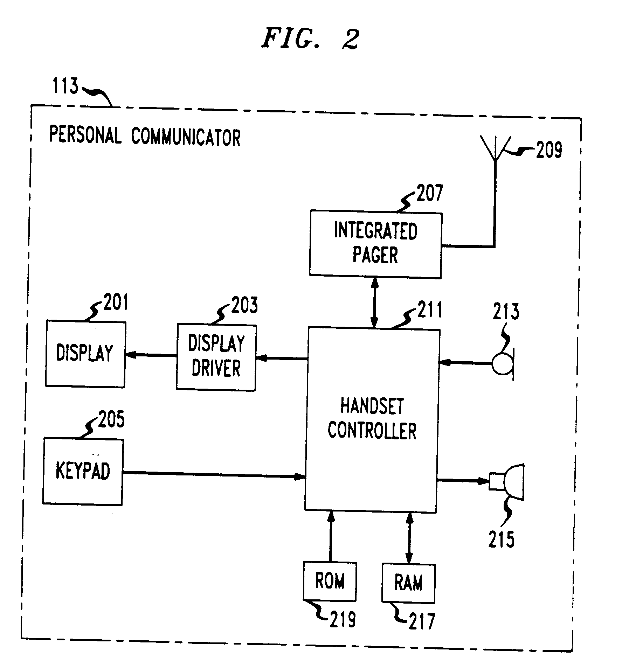

FIG. 2 shows a block diagram of personal communicator 113 as shown in FIG. 1. The illustrative personal communicator advantageously comprises display 201, display driver 203, keypad 205, handset controller 211, integrated pager 207, antenna 209, microphone 213, speaker 215, ROM 219, and RAM 217.

Handset controller 211 is advantageously a microprocessor that coordinates the functions of personal communicator 113. Personal communicator 113 is preferably capable of receiving and placing telephone calls via antenna 209. It will be clear to those skilled in the art how to fabricate or purchase handset controller 211. ROM 219 advantageously holds the program instructions for handset controller 211. RAM 217 advantageously holds the number assignment module, which singularizes personal communicator 113. While it will be clear to those skilled in the art that RAM 217 can be any kind of read-writable memory, it is preferred that RAM 217 comprise non-volatile memory.

Integrated pager 207 advantageously is capable of receiving numeric or alphanumeric signals from a wide area (e.g., nationwide) commercial paging system (e.g., Metromedia Paging System) and for delivering those signals to handset controller 211 via one or more electro-magnetic antennas. It will be clear to those skilled in the art how to build integrated pager 207.

Microphone 213 is an electro-acoustic transducer for converting acoustic speech signals to electric signals for transmission by personal communicator 113 to cellsites 101. Speaker 215 is an electro-acoustic transducer for converting electric speech signals received from a cellular base station into acoustic speech signals.

Keypad 205 is advantageously capable of indicating to handset controller 211 that handset controller 211 and integrated pager 207 should be enabled to receive a number assignment module from antenna 111 (as shown in FIG. 1) and should store the received number assignment module into RAM 217. Keypad 205 is also advantageously capable of indicating to handset controller 211 that the reprogramming of personal communicator 113 with a successive number assignment module is to be precluded. It will be clear to those skilled in the art that personal communicator 113 (as shown in FIG. 1) can be enabled or (disabled) from being remotely programmed in a variety of ways (e.g., voice activation, password based activation, etc.).

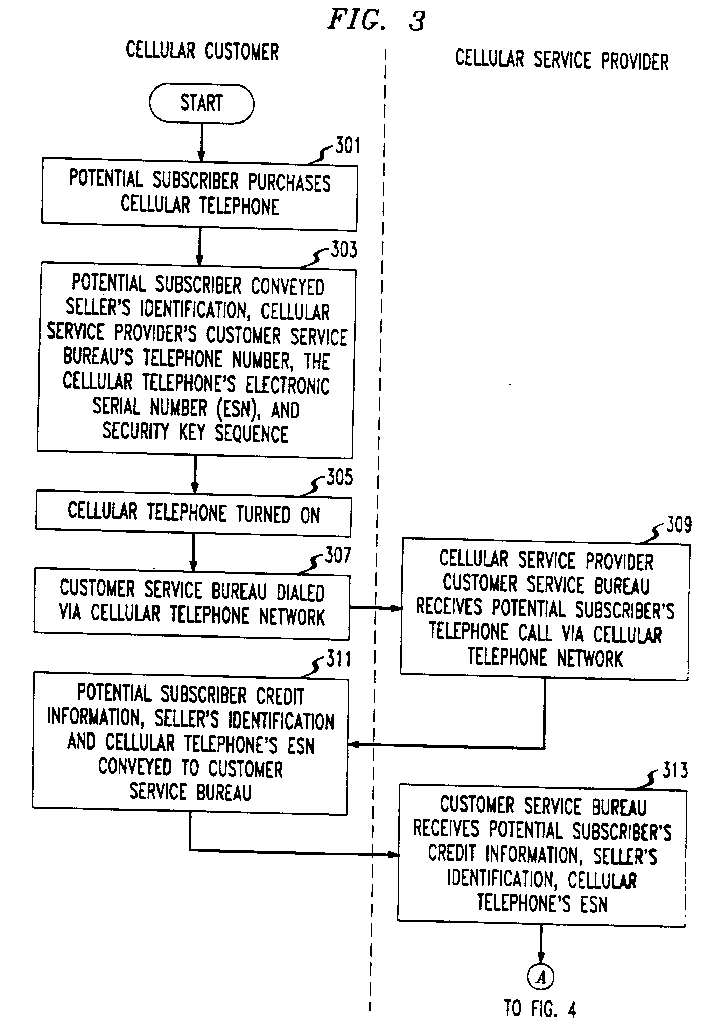

FIG. 3 shows a flowchart detailing the preferred method of operating the illustrative embodiment shown in FIG. 1. As shown at 301 in FIG. 3, a potential subscriber advantageously initiates the process by purchasing a personal communicator and, at 303, by receiving from personal communicator 113 vendor information comprising the vendor's identification, service bureau's 107 telephone number, the electronic serial number of personal communicator 113 and a security key sequence. The security key sequence is advantageously used to encrypt the number assignment module during its transmission from service bureau 107 to personal communicator 113. Next, the potential subscriber turns personal communicator 113 on, as shown in 305, and advantageously calls service bureau 107, as shown at 307.

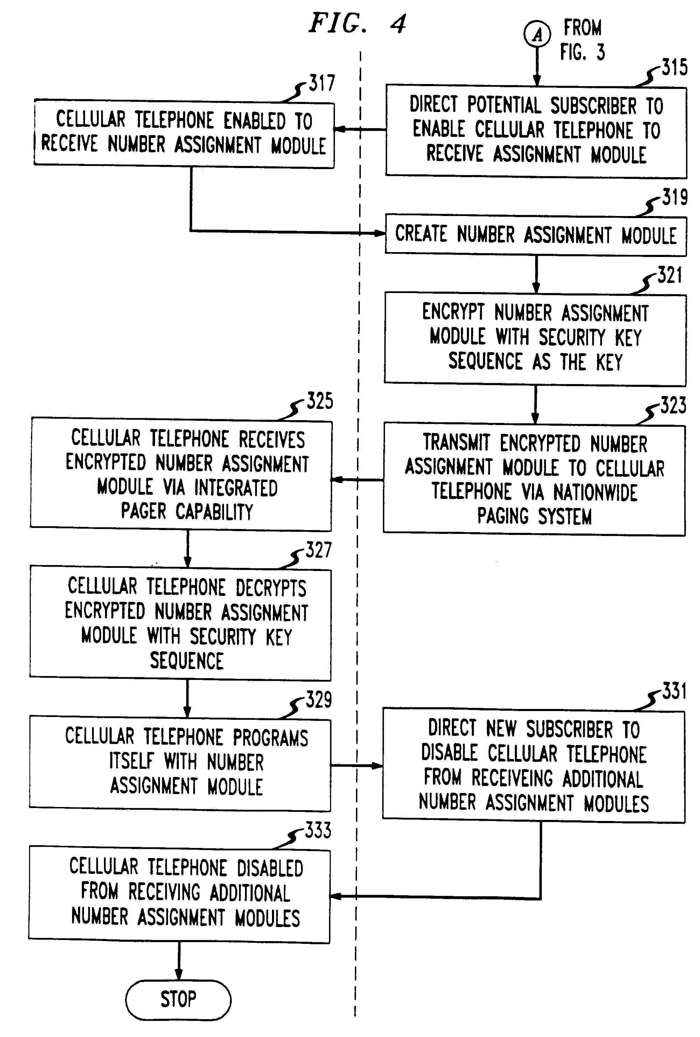

Service bureau 107 advantageously receives the potential subscriber's call, at 309, and receives, as shown at 313, information comprising the potential subscriber's credit information, the personal communicator's vendor's identification, and the personal communicator's electronic serial number "ESN"). From the personal communicator's vendor's identification, service bureau 107 is preferably capable of decoding the security key sequence given to the potential subscriber by the personal communicator's vendor. Service bureau 107 advantageously instructs the potential subscriber to enable personal communicator 113 to receive number assignment module, as shown at 315 in FIG. 4.

Service bureau 107 next advantageously creates the number assignment module, at 319, an encrypts the number assignment module with the security key sequence, at 321. The number assignment module is advantageously transmitted to personal communicator 113 via connection 109 and antenna 111, as shown at 323.

Personal communicator 113 advantageously receives the encrypted number assignment module via integrated pager 207 (shown in FIG. 2) capability, as shown in 325. Next, personal communicator 113 advantageously decrypts the encrypted number assignment module with the security key sequence, as shown at 327, As shown at 329, personal communicator 113 advantageously programs itself with the number assignment module. Next service bureau 107 advantageously directs the new subscriber to disable personal communicator 113 from receiving additional number assignment modules, as shown at 331. The new subscriber advantageously disables personal communicator 113 from receiving additional number assignment modules, as shown at 333.

## Claims

1. A method for programming a number assignment module into a personal communicator, said personal communicator comprising an electro-magnetic antenna, said method comprising the steps of:
turning-on said personal communicator to receive said number assignment module via said electro-magnetic antenna;
receiving said number assignment module from an electro-magnetic transmitter via said electro-magnetic antenna; and
programming said number assignment module into said personal communicator.

2. The method of claim 1 further comprising the steps of:
enabling said personal communicator to receive said number assignment module via said electro-magnetic antenna; and
disabling said personal communicator from receiving additional number assignment modules.

3. The method of claim 1 further comprising the step of decrypting said number assignment module with a security key sequence as a key.

4. A personal communicator comprising:
an electro-magnetic antenna (209);
means for receiving (207) a number assignment module via said electro-magnetic antenna; and
means for storing (211) said number assignment module into a memory (217).

5. The personal communicator of claim 4 further comprising:
means for transmitting and receiving speech signals via said electro-magnetic antenna (209);
a first electro-acoustic transducer (213), connected to said transceiver (211), for converting a first acoustic speech signal into a first electrical signal; and
a second electro-acoustic transducer (215), connected to said transceiver (211), for converting a second electrical signal into a second acoustic signal.

6. The personal communicator of claim 5 further comprising a keypad (205), connected to said transceiver (211), for enabling said personal communicator to receive said number assignment module.

7. The personal communicator of claim 4 wherein said means for receiving (207) comprises a pager.

8. A method for remotely programming a numeric assignment module into a personal communicator, said method comprising the steps of:
creating a number assignment module for said personal communicator; and
transmitting said number assignment module to said personal communicator via an electro-magnetic antenna.

9. The method of claim 8 further comprising the step of encrypting said number assignment module with a security data sequence as a key.

10. The method of claim 8 wherein said step of transmitting is accomplished via an electro-magnetic paging system.
